# EUROPEAN PATENT APPLICATION

(11) **EP 2 870 989 A2**
(43) Date of publication of application: **13.05.2015**
(21) Application number: 13803846.8
(22) Date of filing: 05.06.2013
(51) Int. Cl.: B01D 47/05, B01D 53/14

(54) **GAS PURIFICATION METHOD**

(30) Priority: 15.06.2012 RU 2012124943
(71) Applicant: Khamidullin, Rafik Nailovich, Kazan, 420140 (RU)
(72) Inventor: Khamidullin, Rafik Nailovich, Kazan, 420140 (RU)
(74) Representative: Manzella & Associati
(86) International application number: PCT/RU2013/000459
(87) International publication number: WO 2013/187802

(57) **Abstract**

The invention relates to methods for carrying out heat-mass-exchange processes for a gas-liquid system, including air conditioning and drying, or purifying gases of impurities of other gases, liquid vapor and dispersed solid particles from a gas, and can be used in air conditioning systems, in the sanitary purification of gaseous emissions, and in treatment of natural or associated petroleum gases prior to the use or transport thereof (i.e. in drying or in the removal of higher hydrocarbons, hydrogen sulphide, carbon dioxide, etc.) The object of the present invention is to develop a simple, effective and reliable method for purifying gases of gaseous, liquid and solid impurities, to reduce materials consumption of equipment and to reduce operational costs. The essence of the invention is that the condensate previously formed from gas flow to be purified and cooled to a temperature lower than the dew point of the gas flow is used as a cold heat-transfer fluid, which is in direct contact with the gas flow, in the purification of gases, including the cooling of a gas flow, the formation of a condensate and the separation of said condensate, along with absorbed gaseous and mechanical impurities. A part of the previously obtained condensate, uncooled, is fed prior to the interaction of the gas to be separated and the cooled condensate, in order to saturate the gas phase by vapor, resulting in an increased amount of condensate on the liquid or solid particles, thus increasing separation efficiency. Gas purification is carried out in stages in order to separate an individual component or group of components of the gas phase at each stage. The advantages of the present invention are simplification of the gas purification process, reduction of energy consumption and metal consumption of process instrumentation, possibility of additional effective removal of solid impurities from gas, precise maintenance and automation of purification process parameters (i.e. the amount of vapors, dispersed gases and absorbed gases removed) by regulation of the temperature and amount of fed condensate, and also possibility of avoiding significant losses in gas flow pressure in the purification process by lowering the temperature of the gas by means of an external cooling source, rather than gas cooling by means of throttling thereof.

## Description

The invention is provided for heat-mass-exchange processes for gas-liquid system, including air conditioning and drying, gas purification of impurities of other gases, liquid vapor and dispersed solid particles from a gas. The invention can be employed in air conditioning systems, in the sanitary purification of gaseous emissions, and in treatment of natural or associated petroleum gases prior to the use or transport thereof (drying, removal of higher hydrocarbons, hydrogen sulphide, carbon dioxide, etc.). The invention finds an application in oil and gas processing, heat-power engineering, metallurgy industry, chemical industry, construction industry, and in other branches of industry.

The known petroleum gas dehydration method consists in that cooled gas flow is fed to 70-80% aqueous solution of ethylene glycol (as a hydrate inhibitor) (The drying gas unit operation analysis at the West Siberian gas processing plant. Pluzhnikov G. S. The petroleum gas purification and drying, and equipment corrosion protection. (Collection of scientific papers). Moscow, VNIIOENG (All-Russian Research Institute for the Organization, Management and Economics of the Oil and Gas Industry), 1984.). The most of water vapor is condensed upon gas cooling, as a result the water vapor content in the gas significantly decreases (by 30-200 times, depending on the cooling temperature). Water solution is fed in finely-divided state directly onto the tube sheet of heat exchanger and propane refrigerators into the tube side.

The disadvantage of this method is a complexity of process implementation, low degree of drying and cooling of the gas due to the low efficiency of heat exchange because of the thermal resistance of glycol solution film with condensation and solid separating wall of heat exchanger.

The known method of gas purification of gas condensate consists of absorption liquid in the form of its own gas condensate, swirling of the gas flow in a vortex tube with simultaneous absorbent condensation therein, purified gas disposal and condensation. Absorption is carried out at low pressure, enriched gas flow by own gas condensate is divided in two flows, one of which is swirled in a vortex tube with simultaneous overcooling, purification and disposal of purified gas. Wherein another gas flow is cooled and separated, and the separated gas flow is fed into the general purified gas flow (RU N° 2179880 patent description "Gas purification method and device for its implementation. Malyshev A.I.; Mokshin V.I.; Malysheva E.A., etc., LUKOIL-PERM ZAO (CJSC) 27.02.2002).

The disadvantage of this method is the need for high energy consumption for generation of a high pressure differential, speed for realization of this process. The condensation of separated components from a gas flow requires certain conditions (supersaturation, condensation center availability, etc.) that reduce the gas purification efficiency and increases process time.

Closest to the proposed gas purification method (prior art) is a method of gas treatment. (Specification of author's certificate No. 352094 21.09.1972, Bull. No. 28. N.V. Tsarenko, V.M. Minakovsky, V.A. Antonenko. Gas treatment method). The method consists in gas treatment by cooling and drying, as it passes through the pseudoliquified layer of solid particles, which is wettable by liquid, liquid vapors are removed from the gas, wherein the temperature of the solid particles is maintained lower than the freezing temperature of the liquid.

The disadvantage of the prior art is complexity of the process, its automotization and control, the presence of an intermediate coolant in the form of solids, that generates some difficulties with its cooling, dosing, and disposal.

The object of the present invention is to provide a simple, effective and reliable gas purification method of gaseous, liquid and solid impurities, reducing material consumption of equipment and operational costs.

The object is reached by the fact that in the gas purification process, comprising cooling the gas flow, formation of condensate, separation of said condensate, along with absorbed gaseous and mechanical impurities, the previously formed condensate from gas flow to be purified and cooled to a temperature lower than the dew point of the gas flow is used as a cold heat transfer fluid. A part of the previously obtained condensate, uncooled, is fed before the interaction of the gas to be separated and the cooled condensate, in order to saturate the gas phase by vapor, resulting in an increased amount of condensate on the liquid or solid particles to improve their separation efficiency. To impart certain physico-chemical properties, a various components are added to the condensate used as a heat transfer fluid. The gas purification is carried out in stages in order to separate an individual component or group of components of the gas phase at each stage.

The method is implemented as follows.

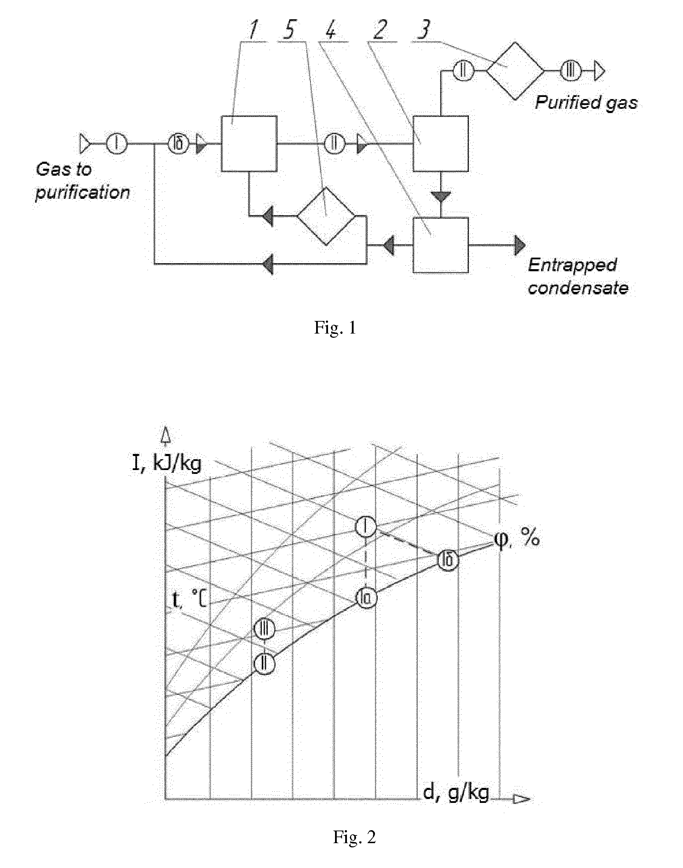

Gas to be purified and cooled condensate are fed into a mixer 1 (see Fig. 1), where the heat and mass transfer occur between the flows. As a result of this interaction, the gas to be purified is cooled down to supersaturating conditions of gas components, and gaseous impurities condense on the surface of the cold condensate. Then the gas flow is separated from the dropping liquid in a separator 2, if necessary the gas flow is heated in heater 3 (for example, to initial temperature), and directed further for its destination in a purified form.

The liquid mixture of initial condensate, condenced vapor and absorbed gas impurities is separated from the gas flow in a separator 2, flows into reservoir 4, is cooled in a refregerator 5 (by external cooling source), and further flows at the beginning of the process again to the interaction with the gas flow. Excess condensate is removed from the reservoir 4 and directed further for its destination or for processing and disposal. The process of gas purification and condensate separation is continuous, closed cycle.

In the interaction process with the gas flow, condensate acts as a condensation center of entrapped vapor impurities, which helps speed up the process by reducing the formation time of condensation centers.

Condensate is an absorbent for the physical absorption of other gas impurities that allows extracting components form a gas flow to be purified, wherein dew point (or condensation temperature) of components is significantly lower than the process temperature. This process is accelerated by the reduction of the distribution coefficient of Henry's Law, which describes the content of adsorbed component in a liquid with its equilibrium concentration in the gas, at low temperature, which increases the amount of adsorbed component in the liquid, and as a result, the degree of its extraction from a gas phase.

This process also allows for solid impurities entrapping in a gas flow. Solid impurities depose on a liquid surface during the interaction of liquid condensate with a gas flow to be purified due to inertial forces of particles and turbulent diffusion. The process of solid impurities removal is accelerated by the condensation process, in which dust particles also represent condensation centers for the entrapped vapor. Moreover, during the interaction after entrapping of solid particles the surface of the initial liquid is well renewed by condensed vapor that promotes intensification of the gas purification process of solid particles. In removal of solid particles from the gas, the liquid, with solid impurities entrapped during separation from the gas flow, is also separated from solids.

To increase the amount of vapor (if it is possible under given conditions), which is condensed in the process of interaction of the gas to be purified and the cooled condensate, a part of the previously separated condensate is directed to the mixing with the gas flow prior to cooling. Increasing the amount of vapor in the gas increases the amount of condensation on the surfaces of solid and liquid impurities in cooling process (at constant amount of removed heat), which allows for more effective separation of entrapped particles due to their greater inertia.

If the physico-chemical properties of the liquid phase do not allow for effective interaction with the gas phase under the process conditions (high viscosity, corrosion activity, change of the phase state of impurities, separation of the solid phase, etc.), then various components are added to the condensate to provide the necessary properties.

In order to separate the resulting condensate into components, the gas purification process is carried out in stages. The process conditions may vary in stages by the temperature and pressure, depending on condensate formation conditions of components of the gas flow to be purified. At every stage the condensate separated and used again for interaction with the gas flow has a specific composition corresponding the process conditions.

The implementation of the claimed gas purification method is explained by the scheme shown in FIG. 1.

An embodiment of the method is presented by the process of water vapor separation from the air (drying and cooling of a moist air).

Initial conditions are as follows: incoming air temperature 35° C, humidity 40 %, moisture content 13.89 g/kg, the dew point temperature 19.35° C. The outgoing air temperature 17° C, humidity 80 %, moisture content 9.52 g/kg. The air consumption is 500 kg/hr (435 m³/h), condensate supply temperature is 8.52° C. Heat loss is neglected, the efficiency of interaction between the gas and the liquid is taken 100%.

The graphic illustration of the embodiment is shown in I-d Ramzin diagram, Fig. 2, initial, intermediate and final state parameters of moist air of the considered process are shown in Table.

The interaction of air with the cooled condensate (water) is carried out according to the scheme I-Ia-II-III. Initial conditions correspond to point I. Air under initial conditions flows to the mixer 1 (Fig. 1) and interacts with cooled condensate. The conditions after this interaction correspond to point II. Intermediate state interaction of air and the cooled condensate in the mixer, whereby the air is cooled to the dew point temperature, corresponds to the point la (not shown in the scheme). Since the condensate temperature is less than the dew point, the transition of the condensate to the gas phase generally excluded, therefore in this reaction only cooling of the gas flow to a dew point occurs, and thereafter air is cooled simultaneously with the water vapor condensation. Further, when required parameters for moisture content are achieved (point II), the flow is separated from the liquid phase, if necessary, heated (point III), and further transported to its destination.

**Table of moist air drying and cooling process parameters.**

| Nº | Parameter | Number and name of point | | | | |
|---|---|---|---|---|---|---|
| | | I. Initial state | Ia. Air cooling by cooled condensate to dew point temperature | Ib. Air cooling by water to wet bulb temperature | II. Air cooling and drying on the saturation line | III. Air heating |
| 1 | Dry bulb temperature, ° C | 35 | 19.35 | 23.85 | 13.52 | 17 |
| 2 | Relative humidity, % | 40 | 100 | 100 | 100 | 80 |
| 3 | Enthalpy, kJ/kg | 70.82 | 54.68 | 70.83 | 37.63 | 41.19 |
| 4 | Moisture content, g/kg | 13.89 | 13.89 | 18.41 | 9.52 | 9.52 |
| 5 | Wet bulb temperature, ° C | 23.89 | 23.85 | 23.85 | 13.52 | 14.89 |
| 6 | Dew point temperature, ° C | 19.35 | 19.35 | 23.85 | 13.52 | 13.52 |
| 7 | Water vapor partial pressure, mmHg | 16.6 | 16.6 | 21.85 | 11.45 | 11.45 |

In case of the previously obtained condensate, uncooled, is fed to evaporation before the interaction of the gas to be separated and the cooled condensate, the process follows the scheme I-Ib-II-III, Fig. 2. Point Ib corresponds to wet bulb temperature for the conditions of point I. In this option of interaction, the air is cooled to the temperature of wet bulb by water evaporation, while water vapor proportion in the air increases (see Table, point Ib), and hereinafter the amount of condensed water vapor on the liquid and solid impurities also increases that simplifies their subsequent separation. The amount of removed heat from the gas phase of the present option is similar to the amount of heat according to an option of interaction of the air and cooled condensate, Scheme I-Ia-II-III.

In the considered example, as in the proposed method, depending on the heat and material balance of individual liquid and gas interaction sites, as well as the proportion of the uncooled condensate directed to evaporation, regardless of the interaction scheme, the intermediate points la and Ib position (Fig. 2) may be at any other location, limited by vertices of the triangle with points I-Ia-Ib. However, as the energy removal from the gas flow exceeds the difference in enthalpy values of points I and la, the process will follow the line Ia-II, and then the process will follow identically in all cases along the saturation line.

In the considered example, with the air consumption of 500 kg/h, consumption of the heat removed from the air will be 4.61 kW, including 0.49 kW that returnes for the air heating (from point II to point III). Water consumption will be 0.794 m³/h (including 2.185 l/h of recovered condensate), the change in its temperature during the interaction with air will be 5° C (from 8.52 to 13.52 - dew point temperature of the outgoing air). If necessary, at the end of the purification process the temperature (point III) can be raised to initial value (point I).

The advantages of this method are simplification of the gas purification process, reduction of energy consumption and metal consumption of process instrumentation.

In this purification method a further effective gas purification from solids is possible, that allows a complex gas purification from various impurities.

The proposed method allows to accurately maintain and automate the purification process parameters (amount of extracted vapor, disperse and absorbed gaseous impurities) by regulation of the temperature and the amount of fed condensate.

This method allows to avoid the significant pressure loss of the gas flow for the purification process by reducing the gas temperature using an external cooling source, rather than cooling by gas throttling.

The proposed technical solution is named by the applicant as a process of "Gas purification by cooled condensate."

## Claims

1. Gas purification method, comprising cooling of the gas flow, formation of condensate, separation of said condensate, along with absorbed gaseous and mechanical impurities, **characterized in that** the previously formed condensate from the gas flow to be purified and cooled to a temperature lower than the dew point of the gas flow is used as a cold heat transfer fluid.

2. The method according to claim 1 **characterized in that** a part of the previously obtained condensate, uncooled, is fed before the interaction of the gas to be separated and the cooled condensate, in order to saturate the gas phase by vapor, resulting in an increased amount of the condensate on the liquid or solid particles to improve their separation efficiency.

3. The method according to claim 1 **characterized in that** various components are added to the condensate, used as a heat transfer fluid, to impart certain physico-chemical properties.

4. The method according to claim 1 **characterized in that** the gas purification process is carried out in stages, in order to separate an individual component or group of components of the gas phase at each stage.
